# EUROPEAN PATENT APPLICATION

(11) **EP 4 723 601 A1**
(43) Date of publication of application: **08.04.2026**
(21) Application number: 24813818.2
(22) Date of filing: 15.03.2024
(51) Int. Cl.: H04L 67/60, H04W 24/02

(54) **COMMUNICATION SYSTEM, COMMUNICATION METHOD AND APPARATUS**

(30) Priority: 01.06.2023 CN 202310650022
(71) Applicant: Datang Mobile Communications Equipment Co., Ltd., Beijing 100085 (CN)
(72) Inventor: SUN, Wanfei, Beijing 100085 (CN); CHEN, Shanzhi, Beijing 100085 (CN); XU, Hui, Beijing 100085 (CN)
(74) Representative: Ipsilon
(86) International application number: PCT/CN2024/081838
(87) International publication number: WO 2024/244612

(57) **Abstract**

The present disclosure relates to the technical field of communications, and provides a communication system, a communication method and an apparatus. The communication system comprises a first entity, a second entity, a third entity, and at least one fourth entity; the first entity, the second entity, the third entity, and the at least one fourth entity are connected to one another; the second entity is used for acquiring a service requirement and sending a service request message to the first entity; the first entity is used for determining an execution operation list of a target service according to the service request message; the third entity is used for determining at least one operation to be executed of each fourth entity according to the execution operation list; and each fourth entity is used for executing the at least one operation to be executed to obtain an execution result.

## Description

This disclosure claims priority to Chinese Patent Application No. 202310650022.1, filed with the CNIPA on June 1, 2023 and entitled "COMMUNICATION SYSTEM, COMMUNICATION METHOD AND APPARATUS", which is incorporated herein by reference in its entirety.

### TECHNICAL FIELD

The present disclosure relates to the field of communications technologies, and in particular, to a communication system, a communications method, and a communication apparatus.

### BACKGROUND

Intelligent endogenesis of the 6th Generation (6G) mobile communication system may be that a 6G network uses an AI capability as a basic network service by using a native support Artificial Intelligence (Al), so as to implement AI as a Service (AlaaS), with which a network can self-learn and self-evolve, thereby providing various intelligent endogenous services such as an AI service, a computing service, and/or a data service for users, networks, or third parties.

Although a network architecture and a network process of an existing mobile communication system may provide connection and data transmission services for users, intelligent endogenous services such as the AI service and the computing service still cannot be provided.

### SUMMARY

The present disclosure provides a communication system, a communication method, and a communication apparatus, which can provide intelligent endogenous services for users.

According to a first aspect, an embodiment of the present disclosure provides a communication system, where the communication system includes a first entity, a second entity, a third entity, and at least one fourth entity, the first entity, the second entity, the third entity, and at least one fourth entity being connected to each other;
where the second entity is configured to acquire a service requirement and send a service request message to the first entity;
the first entity is configured to determine an execution operation list of a target service according to the service request message;
the third entity is configured to determine at least one execution operation of each fourth entity according to an execution operation list; and
each fourth entity is configured to execute the at least one execution operation and obtain an execution result.

In an implementation, the first entity is deployed in an access network or a core network; the second entity is a first terminal device, or the second entity is deployed in a second terminal device, the access network, or the core network; the third entity is a third terminal device, or the third entity is deployed in a fourth terminal device, the access network, or the core network; and each fourth entity is a fifth terminal device, or each fourth entity is deployed in a sixth terminal device, the access network, or the core network. The first terminal device, the third terminal device and the fifth terminal device are the same or different, and the second terminal device, the fourth terminal device and the sixth terminal device are the same or different.

In an implementation, each fourth entity is further configured to send an execution operation response message to the third entity, where the execution operation response message includes the execution result, an identifier of the target service, an identifier of the each fourth entity, and multiple indication parameters. The execution result is configured to determine a service result. The multiple indication parameters are configured to indicate a current service stage and a next service stage.

In an implementation, the third entity is further configured to send a first response message to the first entity, where the first response message includes the service result, the identifier of the target service, and the multiple indication parameters.

In an implementation, the first entity is further configured to send a service response message to the second entity, where the service response message includes the service result, the identifier of the target service, and the multiple indication parameters.

In an implementation, the first entity is further configured to send a first indication message to the third entity, where the first indication message includes the execution operation list, an identifier of the target service, multiple indication parameters, and an identifier of an anchor network element. The execution operation list includes an execution operation of the third entity and an execution operation of at least one fourth entity.

In an implementation, the third entity is further configured to send an execution operation request message to the at least one fourth entity. The execution operation request message includes an identifier of the target service, an identifier of a target fourth entity, multiple indication parameters, and an execution operation sub-list of the target fourth entity, where the execution operation sub-list includes at least one execution operation.

In an implementation, the first entity is specifically configured to: acquire load data of multiple candidate entities, and determine the execution operation list according to the load data and the service request message. The service request message includes at least one of the following: an identifier of the second entity; multiple indication parameters; a service type of the target service; or requirement information of the target service.

In an implementation, the third entity interacts with the at least one fourth entity to update execution information of each fourth entity, where the execution information includes resource information and/or execution operation information.

According to a second aspect, an embodiment of the present disclosure provides a communication method, applied to a first entity, and the method includes:
receiving a service request message sent by a second entity;
determining an execution operation list of a target service according to the service request message;
sending a first indication message to a third entity, where the first indication message includes the execution operation list;
receiving a first response message sent by the third entity, where the first response message includes a service result; and
sending a service response message to the second entity, where the service response message includes the service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the first indication message further includes an identifier of the target service, multiple indication parameters, and an identifier of an anchor network element.

In an implementation, the execution operation list includes an execution operation of the third entity and an execution operation of at least one fourth entity.

In an implementation, the first response message further includes an identifier of the target service and multiple indication parameters, and the service response message further includes the identifier of the target service and the multiple indication parameters.

In an implementation, determining an execution operation list of the target service according to the service request message includes:
acquiring load data of multiple candidate entities; and
determining the execution operation list according to the load data and the service request message.

According to a third aspect, an embodiment of the present disclosure provides a communication method, applied to a third entity, and the method includes:
receiving a first indication message sent by a first entity, where the first indication message includes an execution operation list of a target service;
determining at least one execution operation of each fourth entity in at least one fourth entity according to the execution operation list;
sending an execution operation request message to the at least one fourth entity;
receiving an execution operation response message sent by the at least one fourth entity; and
sending a first response message to the first entity, where the first response message includes a service result.

In an implementation, the execution operation list includes an execution operation of the third entity and an execution operation of the at least one fourth entity.

In an implementation, the execution operation request message includes an identifier of the target service, an identifier of a target fourth entity, multiple indication parameters, and an execution operation sub-list of the target fourth entity. The multiple indication parameters are configured to indicate a current service stage and a next service stage. The execution operation sub-list includes at least one execution operation.

In an implementation, the execution operation response message includes an identifier of the target service, an identifier of a target fourth entity, multiple indication parameters, and an execution result of the target fourth entity, and the first response message further includes the identifier of the target service and the multiple indication parameters. The execution result is configured to determine the service result.

In an implementation manner, the method further includes:
receiving feedback information sent by the at least one fourth entity;
sending a coordination indication message to the at least one fourth entity according to the feedback information, where the coordination indication message is configured to instruct each fourth entity to update execution information, and the execution information includes resource information and/or execution operation information; and
receiving a coordination response message sent by the at least one fourth entity.

According to a fourth aspect, an embodiment of the present disclosure provides a communication method, applied to a fourth entity, and the method includes:
receiving an execution operation request message sent by a third entity;
determining an execution result according to the execution operation request message; and
sending an execution operation response message to the third entity, where the execution operation response message includes an execution result.

In an implementation, the execution operation request message includes an identifier of a target service, an identifier of the fourth entity, multiple indication parameters, and an execution operation sub-list of the fourth entity. The multiple indication parameters are configured to indicate a current service stage and a next service stage, and the execution operation sub-list includes at least one execution operation.

In an implementation, the execution operation response message further includes the identifier of the target service, the identifier of the fourth entity, and the multiple indication parameters.

In an implementation manner, the method further includes:
sending feedback information to the third entity;
receiving a coordination indication message sent by the third entity;
updating execution information according to the coordination indication message, where the execution information includes resource information and/or execution operation information; and
sending a coordination response message to the third entity.

According to a fifth aspect, an embodiment of the present disclosure provides a communication method, applied to a second entity, and the method includes:
acquiring a service requirement;
sending a service request message to a first entity, where the service request message is configured to request for execution of a target service; and
receiving a service response message sent by the first entity, where the service response message includes a service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the service response message further includes an identifier of the target service and multiple indication parameters.

According to a sixth aspect, an embodiment of the present disclosure provides a communication apparatus, including:
a first receiving unit, configured to receive a service request message sent by a second entity;
a determining unit, configured to determine an execution operation list of a target service according to the service request message;
a first sending unit, configured to send a first instruction message to a third entity, where the first instruction message includes the execution operation list;
a second receiving unit, configured to receive a first response message sent by the third entity, where the first response message includes a service result; and
a second sending unit, configured to send a service response message to the second entity, where the service response message includes the service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the first indication message further includes an identifier of the target service, multiple indication parameters, and an identifier of an anchor network element.

In an implementation, the execution operation list includes an execution operation of the third entity and an execution operation of at least one fourth entity.

In an implementation, the first response message further includes an identifier of the target service and multiple indication parameters, and the service response message further includes the identifier of the target service and the multiple indication parameters.

In an implementation, the determining unit is specifically configured to:
acquire load data of multiple candidate entities; and
determine the execution operation list according to the load data and the service request message.

According to a seventh aspect, an embodiment of the present disclosure provides a communication apparatus, including:
a first receiving unit, configured to receive a first instruction message sent by a first entity, where the first instruction message includes an execution operation list of a target service;
a determining unit, configured to determine at least one execution operation of each fourth entity in at least one fourth entity according to the execution operation list;
a first sending unit, configured to send an execution operation request message to the at least one fourth entity;
a second receiving unit, configured to receive an execution operation response message sent by the at least one fourth entity; and
a second sending unit, configured to send a first response message to the first entity, where the first response message includes a service result.

In an implementation, the execution operation list includes an execution operation of a third entity and an execution operation of at least one fourth entity.

In an implementation, the execution operation request message includes an identifier of the target service, an identifier of a target fourth entity, multiple indication parameters, and an execution operation sub-list of the target fourth entity. The multiple indication parameters are configured to indicate a current service stage and a next service stage. The execution operation sub-list includes at least one execution operation.

In an implementation, the execution operation response message includes an identifier of the target service, an identifier of a target fourth entity, multiple indication parameters, and an execution result of the target fourth entity, and the first response message further includes the identifier of the target service and the multiple indication parameters. The execution result is configured to determine the service result.

In an implementation, the apparatus further includes:
a third receiving unit, configured to receive feedback information sent by the at least one fourth entity;
a third sending unit, configured to send a coordination indication message to the at least one fourth entity according to feedback information, where the coordination indication message is configured to instruct each fourth entity to update execution information, and the execution information includes resource information and/or execution operation information; and
a fourth receiving unit, configured to receive a coordination response message sent by the at least one fourth entity.

According to an eighth aspect, an embodiment of the present disclosure provides a communication apparatus, including:
a first receiving unit, configured to receive an execution operation request message sent by a third entity;
a determining unit, configured to determine an execution result according to the execution operation request message; and
a second sending unit, configured to send an execution operation response message to the third entity, where the execution operation response message includes the execution result.

In an implementation, the execution operation request message includes an identifier of a target service, an identifier of a fourth entity, multiple indication parameters, and an execution operation sub-list of the fourth entity. The multiple indication parameters are configured to indicate a current service stage and a next service stage, and the execution operation sub-list includes at least one execution operation.

In an implementation, the execution operation response message further includes the identifier of the target service, the identifier of the fourth entity, and the multiple indication parameters.

In an implementation, the apparatus further includes:
a second sending unit, configured to send feedback information to the third entity;
a second receiving unit, configured to receive a coordination indication message sent by the third entity;
an updating unit, configured to update execution information according to the coordination indication message, where the execution information includes resource information and/or execution operation information; and
a third sending unit, configured to send a coordination response message to the third entity.

According to a ninth aspect, an embodiment of the present disclosure provides a communication apparatus, including:
an acquiring unit, configured to acquire a service requirement;
a sending unit, configured to send a service request message to a first entity, where the service request message is configured to request for execution of a target service; and
a receiving unit, configured to receive a service response message sent by the first entity, where the service response message includes a service result.

In an implementation, the service request message includes at least one of the following: an identifier of a second entity; multiple indication parameters, where the multiple indication parameters are configured to indicate a current service stage and a next service stage; a service type of the target service; or requirement information of the target service.

In an implementation, the service response message further includes an identifier of the target service and multiple indication parameters.

According to a tenth aspect, an embodiment of the present disclosure provides a communication apparatus, including a memory, a transceiver, and a processor, where
the memory is configured to store a computer program;
the transceiver is configured to receive and transmit data under control of the processor; and
the processor is configured to read the computer program in the memory and perform:
   receiving a service request message sent by a second entity;
   determining an execution operation list of a target service according to the service request message;
   sending a first indication message to a third entity, where the first indication message includes the execution operation list;
   receiving a first response message sent by the third entity, where the first response message includes a service result; and
   sending a service response message to the second entity, where the service response message includes the service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the first indication message further includes an identifier of the target service, multiple indication parameters, and an identifier of an anchor network element.

In an implementation, the execution operation list includes an execution operation of the third entity and an execution operation of at least one fourth entity.

In an implementation, the first response message further includes an identifier of the target service and multiple indication parameters, and the service response message further includes the identifier of the target service and the multiple indication parameters.

In an implementation, the processor is specifically configured to perform:
acquiring load data of multiple candidate entities; and
determining the execution operation list according to the load data and the service request message.

According to an eleventh aspect, an embodiment of the present disclosure provides a communication apparatus, including a memory, a transceiver, and a processor, where
the memory is configured to store a computer program;
the transceiver is configured to receive and transmit data under control of the processor; and
the processor is configured to read the computer program in the memory and perform:
   receiving a first indication message sent by a first entity, where the first indication message includes an execution operation list of a target service;
   determining at least one execution operation of each fourth entity in at least one fourth entity according to the execution operation list;
   sending an execution operation request message to the at least one fourth entity;
   receiving an execution operation response message sent by the at least one fourth entity; and
   sending a first response message to the first entity, where the first response message includes a service result.

In an implementation, the execution operation list includes an execution operation of a third entity and an execution operation of the at least one fourth entity.

In an implementation, the execution operation request message includes an identifier of the target service, an identifier of a target fourth entity, multiple indication parameters, and an execution operation sub-list of the target fourth entity. The multiple indication parameters are configured to indicate a current service stage and a next service stage. The execution operation sub-list includes at least one execution operation.

In an implementation, the execution operation response message includes an identifier of the target service, an identifier of a target fourth entity, multiple indication parameters, and an execution result of the target fourth entity, and the first response message further includes the identifier of the target service and the multiple indication parameters. The execution result is configured to determine the service result.

In an implementation, the processor is further configured to perform:
receiving feedback information sent by the at least one fourth entity;
sending a coordination indication message to the at least one fourth entity according to the feedback information, where the coordination indication message is configured to instruct each fourth entity to update execution information, and the execution information includes resource information and/or execution operation information; and
receiving a coordination response message sent by the at least one fourth entity.

According to a twelfth aspect, an embodiment of the present disclosure provides a communication apparatus, including a memory, a transceiver, and a processor, where
the memory is configured to store a computer program;
the transceiver is configured to receive and transmit data under control of the processor; and
the processor is configured to read the computer program in the memory and perform:
   receiving an execution operation request message sent by a third entity;
   determining an execution result according to the execution operation request message; and
   sending an execution operation response message to the third entity, where the execution operation response message includes an execution result.

In an implementation, the execution operation request message includes an identifier of a target service, an identifier of a fourth entity, multiple indication parameters, and an execution operation sub-list of the fourth entity. The multiple indication parameters are configured to indicate a current service stage and a next service stage, and the execution operation sub-list includes at least one execution operation.

In an implementation, the execution operation response message further includes an identifier of a target service, an identifier of a fourth entity, and multiple indication parameters.

In an implementation, the processor is further configured to perform:
sending feedback information to the third entity;
receiving a coordination indication message sent by the third entity;
updating execution information according to the coordination indication message, where the execution information includes resource information and/or execution operation information; and
sending a coordination response message to the third entity.

According to a thirteenth aspect, an embodiment of the present disclosure provides a communication apparatus, including a memory, a transceiver, and a processor, where
the memory is configured to store a computer program;
the transceiver is configured to receive and transmit data under control of the processor; and
the processor is configured to read the computer program in the memory and perform:
   acquiring a service requirement;
   sending a service request message to a first entity, where the service request message is configured to request for execution of a target service; and
   receiving a service response message sent by the first entity, where the service response message includes a service result.

In an implementation, the service request message includes at least one of the following: an identifier of a second entity; multiple indication parameters, where the multiple indication parameters are configured to indicate a current service stage and a next service stage; a service type of the target service; or requirement information of the target service.

In an implementation, the service response message further includes an identifier of the target service and multiple indication parameters.

According to a fourteenth aspect, an embodiment of the present disclosure provides a non-transitory readable storage medium, where the non-transitory readable storage medium stores a computer program, and the computer program is configured to enable a processor to perform the method in any one of the second aspect.

According to a fifteenth aspect, an embodiment of the present disclosure provides a non-transitory readable storage medium, where the non-transitory readable storage medium stores a computer program, and the computer program is configured to enable a processor to execute the method in any one of the third aspect.

According to a sixteenth aspect, an embodiment of the present disclosure provides a non-transitory readable storage medium, where the non-transitory readable storage medium stores a computer program, and the computer program is configured to enable a processor to execute the method in any one of the fourth aspect.

According to a seventeenth aspect, an embodiment of the present disclosure provides a non-transitory readable storage medium, where the non-transitory readable storage medium stores a computer program, and the computer program is configured to enable a processor to execute the method in any one of the fifth aspect.

The present disclosure provides a communication system, a communication method, and a communication apparatus, where the communication system includes a first entity, a second entity, a third entity, and at least one fourth entity, and a closed-loop service procedure is established by interactions among the first entity, the second entity, the third entity, and the at least one fourth entity, thereby implementing on-demand supply of an intelligent endogenous service.

It should be understood that the content described in the summary is not intended to limit any key or important feature of the embodiments of the present invention, nor is it intended to limit the scope of the present invention. Other features of the present invention will be readily understood with the following description.

### BRIEF DESCRIPTION OF THE DRAWINGS

To describe the technical solutions in the present disclosure or the related technology more clearly, the following briefly describes the accompanying drawings required for describing the embodiments or the related technology. Apparently, the accompanying drawings in the following description show some embodiments of the present invention, and a person of ordinary skill in the art may still derive other drawings from these accompanying drawings without creative efforts.
FIG. 1 is a schematic architecture diagram of a communication system in a related technology;
FIG. 2 is a schematic architecture diagram of a communication system according to an embodiment of the present disclosure;
FIG. 3 is another schematic architecture diagram of a communication system according to an embodiment of the present disclosure;
FIG. 4 is still another schematic architecture diagram of a communication system according to an embodiment of the present disclosure;
FIG. 5 is a flowchart of a communication method according to an embodiment of the present disclosure;
FIG. 6 is another flowchart of a communication method according to an embodiment of the present disclosure;
FIG. 7 is a schematic structural diagram of a communication apparatus 700 according to an embodiment of the present disclosure;
FIG. 8A is a schematic structural diagram of a communication apparatus 800 according to an embodiment of the present disclosure;
FIG. 8B is another schematic structural diagram of a communication apparatus 800 according to an embodiment of the present disclosure;
FIG. 9A is a schematic structural diagram of a communication apparatus 900 according to an embodiment of the present disclosure;
FIG. 9B is another schematic structural diagram of a communication apparatus 900 according to an embodiment of the present disclosure;
FIG. 10A is a schematic structural diagram of a communication apparatus 1000 according to an embodiment of the present disclosure;
FIG. 10B is another schematic structural diagram of a communication apparatus 1000 according to an embodiment of the present disclosure;
FIG. 11 is a schematic structural diagram of a communication apparatus 1100 according to an embodiment of the present disclosure;
FIG. 12 is a schematic structural diagram of a communication apparatus 1200 according to an embodiment of the present disclosure;
FIG. 13 is a schematic structural diagram of a communication apparatus 1300 according to an embodiment of the present disclosure; and
FIG. 14 is a schematic structural diagram of a communication apparatus 1400 according to an embodiment of the present disclosure.

### DETAILED DESCRIPTION OF THE EMBODIMENTS

In embodiments of the present invention, the term "and/or" describes an association relationship between associated objects, and indicates that there can be three relationships. For example, A and/or B may indicate that there are three cases: only A exists, A and B coexist, and only B exists. The character "/" generally indicates that the associated objects are of "or" relationship.

In the embodiments of the present disclosure, the term "multiple" refers to two or more, and measure words used together with this term also refer to two or more.

The following clearly and completely describes the technical solutions in the embodiments of the present disclosure with reference to the accompanying drawings in the embodiments of the present disclosure. Apparently, the described embodiments are merely some rather than all embodiments of the present disclosure. Based on the embodiments of the present disclosure, all other embodiments obtained by a person of ordinary skill in the art without creative efforts fall within the protection scope of the present disclosure.

Embodiments of the present disclosure provide a communication system, a communications method, and an apparatus, which intend to provide intelligent endogenous services such as AI services, computing services, and/or data services for users, networks, or third parties.

The method and the apparatus are based on a same inventive concept. Because principles of solving problems by the method and the apparatus are similar, for implementation of the apparatus and the method, reference may be made to each other, and repetitions of the same details are omitted.

The terminal device in the embodiments of the present disclosure may be a device that provides voice and/or data connectivity to a user, a handheld device with a wireless connection function, other processing devices connected to a wireless modem, or the like. In different systems, terminal devices may have different names. For example, in a 5G system, the terminal device may be referred to as User Equipment (UE). The wireless terminal device may communicate with one or more Core Networks (CNs) through a Radio Access Network (RAN). The wireless terminal device may be a mobile terminal device, such as a mobile phone (or referred to as a "cellular" phone) and a computer that has the mobile terminal device. For example, the wireless terminal device may be a portable, pocket-sized, handheld, computer-built-in, or in-vehicle mobile device that exchanges language and/or data with the radio access network. For example, it can be a device such as a Personal Communication Service PCS) phone, a cordless phone, a Session Initiated Protocol (SIP) phone, a Wireless Local Loop (WLL) station, or a Personal Digital Assistant (PDA). The wireless terminal device may also be referred to as a system, a subscriber unit, a subscriber station, a mobile station, a mobile, a remote station, an access point, a remote terminal device, an access terminal, a user terminal, a user agent, and a user device, which are not limited in the embodiments of the disclosure.

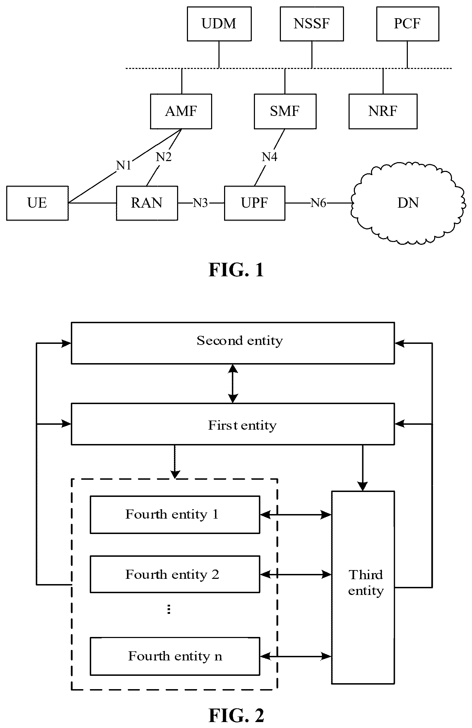

FIG. 1 is a schematic architecture diagram of a communication system in a related technology. As shown in FIG. 1, the architecture includes a terminal device, an access network device, a core network device, and a Data Network (DN) part.

The core network device may also be referred to as a core network element or a core network functional entity. As an example, the core network functional entity may include any one of the following: a Policy Control Function (PCF) entity, a Network Slice Selection Function (NSSF) entity, a Unified Data Management (UDM) entity, a Network Repository Function (NRF) entity, a session management function (SMF) entity, an access and mobility management function (AMF) entity, and a user plane function (UPF) entity. Functions of the foregoing functional entities are exemplarily given as follows.

The PCF entity is a unified policy framework that is mainly configured to guide network behavior, and provide information about policy, regulation and the like for control plane entities (such as AMF and SMF).

The AMF entity is mainly responsible for functions such as access control, mobility management, registration and de-registration.

The SMF entity is mainly responsible for user plane network element selection, user plane network element redirection, Internet Protocol (IP) address allocation of the terminal device, session establishment, modification and release, and Quality of Service (QoS) control.

The UPF entity is mainly responsible for receiving and forwarding user plane data. For example, the UPF entity can receive the user plane data from a service server, and forward the user plane data to the terminal device via the access network device. The UPF entity may also receive user plane data from the terminal device via the access network device, and forward the user plane data to the service server.

The NSSF entity is mainly responsible for network slice selection.

The UDM entity is mainly responsible for subscription data management of the terminal device, including storage and management of terminal device identifiers, access authorization for the terminal devices, and the like.

The data network part may be a data network that provides services for users. Generally, a client is located in a terminal device, and a server is located in a data network. The data network may be a private network such as a local area network, or an external network beyond management and control by operators, such as the Internet, or a dedicated network deployed jointly by the operators.

FIG. 1 illustrates a network architecture of the current fifth generation (5G) mobile communication system. Similar to previous generations of mobile communication systems, the 5G mobile communication system is designed to be centralized on connections and data transmissions to provide connection and data transmission services for users, however, it cannot provide intelligent endogenous services such as AI services and computing services.

In view of the technical problem in the existing technology, a communication system having a new network architecture is provided according to an embodiment of the present disclosure. The communication system can provide, as required, intelligent endogenous services such as AI services, computing services, and/or data services for a user, a network, or a third party.

FIG. 2 is a schematic architecture diagram of a communication system according to an embodiment of the present disclosure. As shown in FIG. 2, the architecture includes a first entity, a second entity, a third entity, and at least one fourth entity. The second entity is configured to acquire a service requirement, and send a service request message to the first entity. The first entity is configured to determine an execution operation list of a target service according to the service request message. The third entity is configured to determine at least one execution operation of each fourth entity according to the execution operation list. Each fourth entity is configured to execute at least one execution operation to obtain an execution result.

In a possible implementation, the second entity may determine the service requirement by receiving a request sent by a user. The second entity may also perceive changing of a scenario requirement, and determine the service requirement by analysing perception data. The second entity may further analyse current data and historical data by using an AI algorithm to determine the service requirement. The current data and the historical data may refer to device data, network data, or third-party data.

In a possible implementation, the second entity may be further configured to receive a service response message sent by the first entity.

The service response message may include a service result, an identifier of the target service, and multiple indication parameters. The multiple indication parameters may be utilized to indicate a current service stage and a next service stage.

The identifier of the target service may be an identifier allocated by the first entity to the target service. The target service may be a service determined by the second entity according to a requirement.

The multiple indication parameters may include a current Service Procedure Indicator (SPI) and a Next-step Service Procedure Indicator (NSPI). The SPI may be utilized to indicate the current service stage, and the NSPI may be utilized to indicate the next service stage.

The current service stage may refer to an operation that the communication system needs to perform currently during a process of providing the target service, and the next service stage may refer to an operation that the communication system needs to perform next during the process of providing the target service.

The whole process of providing the target service by the communication system may include the following stages: a Require Analysing (RA) stage, a Network Adaptability (NA) stage, a Network Collaboration (NC) stage, a Network Execution (NE) stage, and a Network Execution Response (NER) stage.

In the RA stage, it is mainly to determine the service requirement. In the NA stage, it is mainly to determine the execution operation list. In the NC stage, it is mainly to coordinate execution progress, function, resource and/or the like of the at least one fourth entity and determine at least one execution operation of each fourth entity. In the NE stage, it is mainly to execute at least one execution operation. The NER stage mainly includes a response to the execution operation. The resource may include a computing resource, a storage resource and/or the like.

Service stages indicated by the SPI and the NSPI may be the same or different.

For example, the SPI and the NSPI may indicate different service stages by using parameter values shown in the following table:

| Indication parameters | Parameter value | Parameter value description |
|---|---|---|
| SPI | RA | The current stage is RA stage. |
| | NA | The current stage is NA stage. |
| | NC | The current stage is NC stage. |
| | NE | The current stage is NE stage. |
| | NER | The current stage is NER stage. |
| NSPI | RA | The next stage is RA stage. |
| | NA | The next stage is NA stage. |
| | NC | The next stage is NC stage. |
| | NE | The next stage is NE stage. |
| | NER | The next stage is NER stage. |

The current service stage indicated by multiple indication parameters in the service response message may be the NER stage, and the next service stage indicated by the multiple indication parameters may be the NER stage.

After receiving the service response message, the second entity first determines the current service stage and the next service stage according to the multiple indication parameters, and then performs an operation that needs to be performed in the current service stage.

The second entity may be referred to as a Require Analysing Function (RAF) entity.

In a possible implementation, the first entity may be further configured to send the service response message to the second entity.

In a possible implementation, the first entity is specifically configured to: acquire load data of multiple candidate entities, and determine the execution operation list according to the load data and the service request message.

The service request message includes at least one of the following: an identifier of the second entity, multiple indication parameters, a service type of the target service, or requirement information of the target service.

The identifier of the second entity may be an identifier for identity of the second entity.

For example, if the second entity is a terminal device, the identifier of the second entity may be a Subscription Permanent Identifier (SUPI), a Subscription concealed identifier (SUCI), an Access and Mobility Management Function User Equipment NG Application Protocol Identifier (AMF UE NGAP ID), or a Radio Access Network User Equipment NG Application Protocol Identifier (RAN UE NGAP ID).

The current service stage indicated by multiple indication parameters in the service request message may be the RA stage, and the next service stage indicated by the multiple indication parameters may be the NA stage.

The service type may include a computing service, a transmission service, an AI training service, an AI reasoning service, or the like.

The requirement information of the target service may refer to a bandwidth, a delay, and the like required for providing the target service.

After receiving the service request message, the first entity first determines the current service stage and the next service stage according to the multiple indication parameters; determines, according to the service type of the target service and the requirement information of the target service, an operation that a subsequent device in the network needs to execute; and determines the execution operation list based on load data of multiple candidate entities.

The load data is utilized to describe a load status of the candidate entity. If the load is relatively large, the candidate entity is not suitable to perform other operations.

The execution operation list may include an execution operation of the third entity and an execution operation of at least one fourth entity. The execution operation may include connection establishment and guarantee, task computing, data processing, AI training, and/or AI reasoning.

For example, a proper third entity and at least one proper fourth entity may be determined according to the service type of the target service and load data of multiple candidate entities, and then an execution operation of each entity is determined according to the service type of the target service and requirement information of the target service.

In a possible implementation, the first entity is further configured to send a first indication message to the third entity.

The first indication message includes the execution operation list, the identifier of the target service, multiple indication parameters, and an identifier of an anchor network element.

The current service stage indicated by the multiple indication parameters in the first indication message may be the NA stage, and the next service stage indicated by the multiple indication parameters may be the NC stage.

The anchor network element may refer to the third entity, or may refer to at least one fourth entity.

The first indication message may further include a Media Access Control (MAC) address of the anchor network element.

In a possible implementation, the first entity is further configured to receive a first response message sent by the third entity.

The first response message includes a service result, the identifier of the target service, and multiple indication parameters.

The service result may be a service result of the target service.

The current service stage indicated by the multiple indication parameters in the first response message may be the NER stage, and the next service stage indicated by the multiple indication parameters may be the NER stage.

The first entity may be referred to as a Network Adaptability Function (NAF) entity.

In a possible implementation, the third entity may be further configured to receive a first indication message sent by the first entity.

In a possible implementation, the third entity may further interact with the at least one fourth entity independently to update execution information of each fourth entity, where the execution information includes resource information and/or execution operation information.

In other words, the third entity may be further configured to coordinate the execution progress, the function, the resource, and/or the like of the at least one fourth entity.

That is, after the third entity determines at least one execution operation of each fourth entity according to the execution operation list, when at least one fourth entity performs its respective operation, the third entity may coordinate the execution progress, the function, the resource, and/or the like of the at least one fourth entity, so that each fourth entity can better perform its respective operation.

In a possible implementation, the third entity may be further configured to send an execution operation request message to at least one fourth entity.

The execution operation request message includes the identifier of the target service, an identifier of a target fourth entity, multiple indication parameters, and an execution operation sub-list of the target fourth entity, where the execution operation sub-list includes at least one execution operation.

The target fourth entity is any one of the at least one fourth entity.

The identifier of the target fourth entity may be an execution operation identifier of the target fourth entity.

The current service stage indicated by the multiple indication parameters in the execution operation request message may be the NC stage, and the next service stage indicated by the multiple indication parameters may be the NE stage.

The third entity may simultaneously send the execution operation request message to the at least one fourth entity, or may sequentially send the execution operation request message to the at least one fourth entity.

In a possible implementation, the third entity may be further configured to receive an execution operation response message sent by at least one fourth entity.

The execution operation response message includes an execution result, the identifier of the target service, the identifier of the fourth entity, and multiple indication parameters.

Each fourth entity may send one execution operation response message.

The execution result may be a result obtained, by the fourth entity that sends the execution operation response message, after performing at least one execution operation.

The execution result of each fourth entity may be utilized to determine a service result of the target service. If there is only one fourth entity, the execution result of the fourth entity may be determined as the service result.

The current service stage indicated by the multiple indication parameters in the execution operation response message may be the NE stage, and the next service stage indicated by the multiple indication parameters may be the NER stage.

In a possible implementation, the third entity may be further configured to send the first response message to the first entity.

The third entity may be referred to as a Network Collaboration Function (NCF) entity.

In a possible implementation, the fourth entity may be configured to implement one function such as a control plane network function, a user plane network function, a data plane network function, a computing network function or the like. That is, the fourth entity may execute a single network service operation, such as connection establishment and data calculation. In addition, a cooperative operation may be executed to provide a complex service, such as subnet establishment and AI joint training. In other words, an execution operation of one service may be performed by a single fourth entity, or may be performed by multiple fourth entities cooperatively.

In a possible implementation, each fourth entity may be further configured to receive the execution operation request message sent by the third entity.

In a possible implementation, each fourth entity may be further configured to send the execution operation response message to the third entity.

The fourth entity may be referred to as a Network Execution Function (NEF) entity.

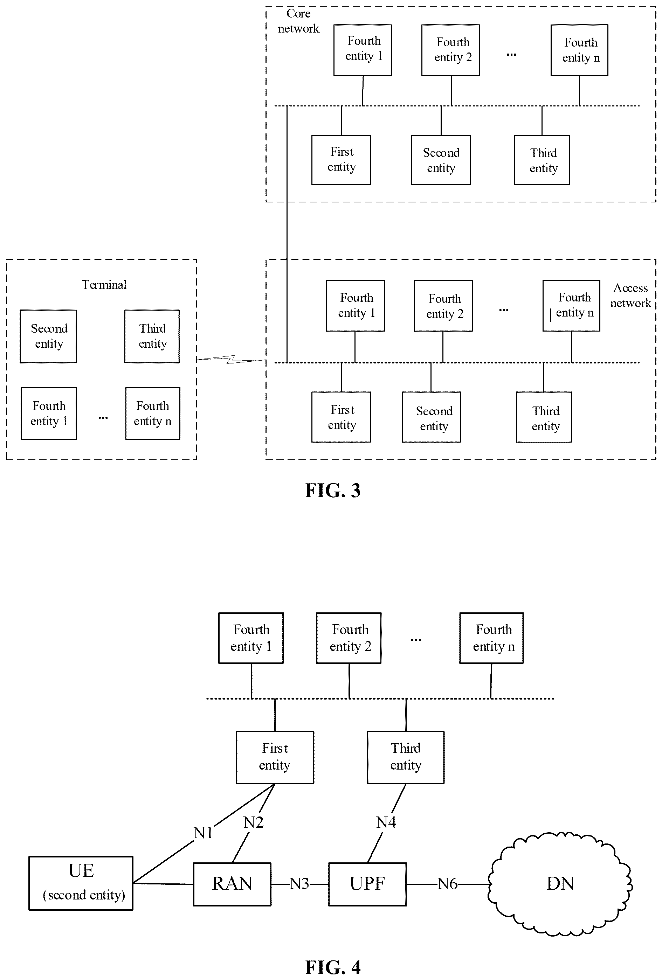

In a possible implementation, as shown in FIG. 3, the first entity may be deployed in an access network or a core network. The second entity is a first terminal device, or the second entity is deployed in a second terminal device, an access network, or a core network. The third entity is a third terminal device, or the third entity is deployed in a fourth terminal device, an access network, or a core network. Each fourth entity is a fifth terminal device, or each fourth entity is deployed in a sixth terminal device, an access network, or a core network. The first terminal device, the third terminal device and the fifth terminal device are the same or different. The second terminal device, the fourth terminal device and the sixth terminal device are the same or different.

In the case where the second entity is the first terminal device, the first terminal device has all functions of the second entity, and all functions of the second entity may be implemented by software.

That the second entity is deployed in the second terminal device may mean that the second entity may be deployed in the second terminal device as a hardware device. The second terminal device has all functions of the second entity, and all functions of the second entity may be implemented by hardware, or may be implemented by combination of software and hardware.

In the case where the third entity is the third terminal device, the third terminal device has all functions of the third entity, and all functions of the third entity may be implemented by software.

That the third entity is deployed in the fourth terminal device may mean that the third entity may be deployed in the fourth terminal device as a hardware device. The fourth terminal device has all functions of the third entity, and all functions of the third entity may be implemented by hardware, or may be implemented by combination of software and hardware.

In the case where the fourth entity is the fifth terminal device, the fifth terminal device has all functions of the fourth entity, and all functions of the fourth entity may be implemented by software.

That the fourth entity is deployed in the sixth terminal device may mean that the fourth entity may be deployed in the sixth terminal device as a hardware device. The sixth terminal device has all functions of the fourth entity, and all functions of the fourth entity may be implemented by hardware, or may be implemented by combination of software and hardware.

In a possible implementation, the first entity, the second entity, the third entity, and the at least one fourth entity may all be deployed in the access network, or they may all be deployed in the core network, or may be respectively deployed in at least two devices of a terminal device, an access network device, and a core network device.

In the case where the first entity, the second entity, the third entity, and the at least one fourth entity are all deployed in the access network, the first entity, the second entity, the third entity, and the at least one fourth entity may be deployed in one access network device, or may be deployed in different access network devices.

In the case where the first entity, the second entity, the third entity, and the at least one fourth entity are all deployed in the core network, the first entity, the second entity, the third entity, and the at least one fourth entity may be deployed in one core network device, or may be deployed in different core network devices.

In the case where each of the second entity, the third entity, and the at least one fourth entity is deployed in a terminal device, the second entity, the third entity, and the at least one fourth entity may be deployed in one terminal device, or may be deployed in different terminal devices.

For example, the second entity may be a terminal device or the second entity is deployed in a terminal device, and the first entity, the third entity, and the at least one fourth entity may be separately deployed in different devices of the core network, as shown in FIG. 4.

In another example, the second entity may be a terminal device or the second entity is deployed in a terminal device, and the first entity, the third entity, and the at least one fourth entity may be separately deployed in different devices of the access network.

In still another example, the second entity may be a terminal device or the second entity is deployed in a terminal device, the first entity may be deployed in the access network, and the third entity and the at least one fourth entity may be separately deployed in different devices of the core network.

In still another example, the second entity may be a terminal device or the second entity is deployed in a terminal device, the first entity and a fourth entity 1 may be deployed in one device of the access network, and the third entity and a fourth entity 2 may be deployed in different devices of the core network.

In still another example, the second entity may be a terminal device 1 or the second entity is deployed in the terminal device 1, the first entity and the fourth entity 1 are separately deployed in different devices of the access network, the third entity is deployed in the core network, the fourth entity 2 is deployed in a terminal device 2, and a fourth entity 3 is deployed in the core network.

The architecture of the communication system in the embodiment of the present disclosure includes not only the foregoing entities, but also other functional entity such as a PCF entity, an AMF entity, a SMF entity, and/or a UPF entity. This is not limited in the embodiment of the present disclosure.

The communication system provided in the embodiment of the present disclosure may provide an intelligent endogenous service such as an AI service for a user, a network, or a third party.

Based on the foregoing communication system architecture, the following describes in detail how multiple entities in the architecture interact to implement on-demand supply of intelligent endogenous services.

It should be noted that for related explanations of the technical terms involved in the embodiments directed to the method, reference can be made to related explanations of the corresponding technical terms in the foregoing communication system. Details are not repeated in the embodiments directed to the method.

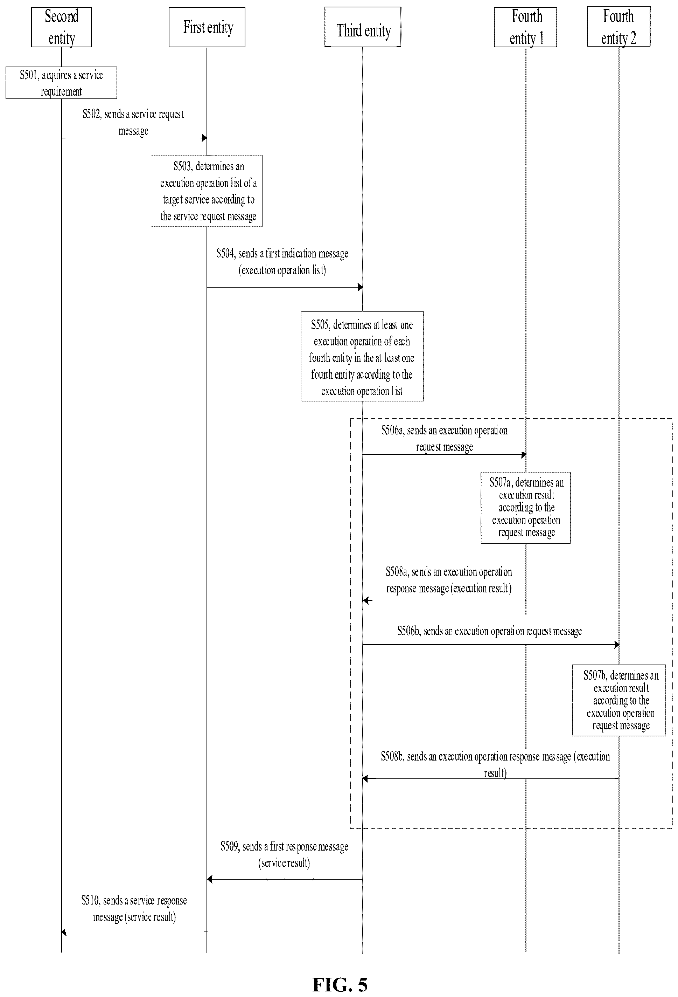

FIG. 5 is a flowchart of a communication method according to an embodiment of the present disclosure. As shown in FIG. 5, the method includes the following steps.

In S501, a second entity acquires a service requirement.

If the second entity is a terminal device, the second entity needs to acquire the service requirement after establishing a connection to the network.

In S502, the second entity sends a service request message to a first entity.

In other words, the first entity receives the service request message sent by the second entity.

In S503, the first entity determines an execution operation list of a target service according to the service request message.

In a possible implementation, the execution operation list of the target service may be determined in the following manner: acquiring load data of multiple candidate entities; and determining the execution operation list according to the load data and the service request message.

For example, the first entity may determine a proper third entity and at least one proper fourth entity according to a service type of the target service and load data of multiple candidate entities, and then determine an execution operation of each entity according to the service type of the target service and requirement information of the target service, and obtain the execution operation list.

In S504, the first entity sends a first indication message to the third entity, where the first indication message includes the execution operation list.

In other words, the third entity receives the first indication message sent by the first entity.

In S505, the third entity determines at least one execution operation of each fourth entity in the at least one fourth entity according to the execution operation list.

In S506, the third entity sends an execution operation request message to the at least one fourth entity.

In other words, each fourth entity receives the execution operation request message sent by the third entity.

FIG. 5 only shows that the third entity sends execution operation request messages to two fourth entities. In the case where the target service does not need to be executed by multiple fourth entities cooperatively (that is, there is only one fourth entity), the third entity may send the execution operation request message to only one fourth entity.

In S507, each fourth entity determines an execution result according to the execution operation request message.

After receiving the execution operation request message, each fourth entity determines, according to an execution operation sub-list in the execution operation request message, at least one execution operation that the each fourth entity needs to execute, and executes the at least one execution operation to obtain an execution result.

In S508, each fourth entity sends an execution operation response message to the third entity, where the execution operation response message includes the execution result.

In other words, the third entity receives the execution operation response message sent by the at least one fourth entity.

In S509, the third entity sends a first response message to the first entity, where the first response message includes a service result.

In other words, the first entity receives the first response message sent by the third entity.

In S510, the first entity sends a service response message to the second entity, where the service response message includes the service result.

In other words, the second entity receives the service response message sent by the first entity.

According to the embodiment with reference to FIG. 5, a closed-loop service procedure is constructed by means of interactions among the first entity, the second entity, the third entity, and at least one fourth entity, which implements on-demand supply of intelligent endogenous services.

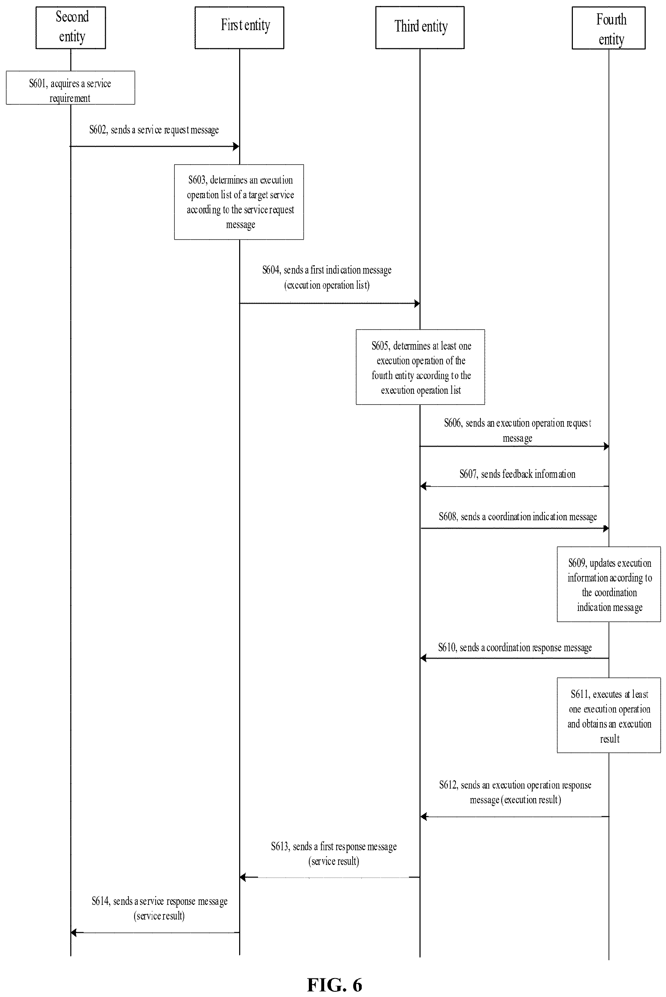

A basic procedure of providing an intelligent endogenous service by the communication system is described in the embodiment with reference to FIG. 5. With reference to FIG. 6, the following describes in detail how a third entity coordinates an execution progress, a function, and/or a resource of at least one fourth entity.

FIG. 6 is another flowchart of a communication method according to an embodiment of the present disclosure. As shown in FIG. 6, the method includes the following steps.

In S601, a second entity acquires a service requirement.

In S602, the second entity sends a service request message to a first entity.

In S603, the first entity determines an execution operation list of a target service according to the service request message.

In S604, the first entity sends a first indication message to a third entity, where the first indication message includes the execution operation list.

In S605, the third entity determines at least one execution operation of a fourth entity according to the execution operation list.

In S606, the third entity sends an execution operation request message to the fourth entity.

FIG. 6 only shows that the third entity sends the execution operation request message to one fourth entity, that is, the target service does not need to be executed by multiple fourth entities cooperatively. If the target service needs to be executed by multiple fourth entities cooperatively, the third entity may separately send execution operation request messages to the multiple fourth entities.

In S607, the fourth entity sends feedback information to the third entity.

The feedback information may include information such as an execution status of the fourth entity and a resource of the fourth entity.

After receiving the execution operation request message, the fourth entity may send feedback information to the third entity. Alternatively, feedback information may be sent to the third entity by the fourth entity in an execution process of the fourth entity. In addition, the fourth entity may periodically send feedback information to the third entity.

In S608, the third entity sends a coordination indication message to the fourth entity according to the feedback information.

The coordination indication message is configured to instruct the fourth entity to update execution information, where the execution information includes resource information and/or execution operation information.

The third entity may receive feedback information sent by multiple fourth entities that execute different target services, coordinate resources of the multiple fourth entities that execute different target services according to the feedback information, and send the coordination indication message to the multiple fourth entities, so as to instruct the multiple fourth entities to cooperate.

In addition, the third entity may receive feedback information sent by multiple fourth entities that execute one target service, coordinate execution progresses, functions, resources, and the like of the multiple fourth entities that cooperatively execute the one target service according to the feedback information, and send the coordination indication message to the multiple fourth entities, so as to instruct the multiple fourth entities to cooperate.

In S609, the fourth entity updates execution information according to the coordination indication message, where the execution information includes resource information and/or execution operation information.

In S610, the fourth entity sends a coordination response message to the third entity.

The coordination response message may be configured to indicate coordination agreement, coordination completion, or coordination rejection.

After receiving the coordination indication message, the fourth entity may send the coordination response message to the third entity, and then the fourth entity updates the execution information according to the coordination indication message.

In S611, the fourth entity executes at least one execution operation and obtains an execution result.

In S612, the fourth entity sends an execution operation response message to the third entity, where the execution operation response message includes the execution result.

In S613, the third entity sends a first response message to the first entity, where the first response message includes a service result.

In S614, the first entity sends a service response message to the second entity, where the service response message includes the service result.

According to the embodiment with reference to FIG. 6, a closed-loop service procedure is constructed by means of interactions among the first entity, the second entity, the third entity, and at least one fourth entity, which implements on-demand supply of intelligent endogenous services.

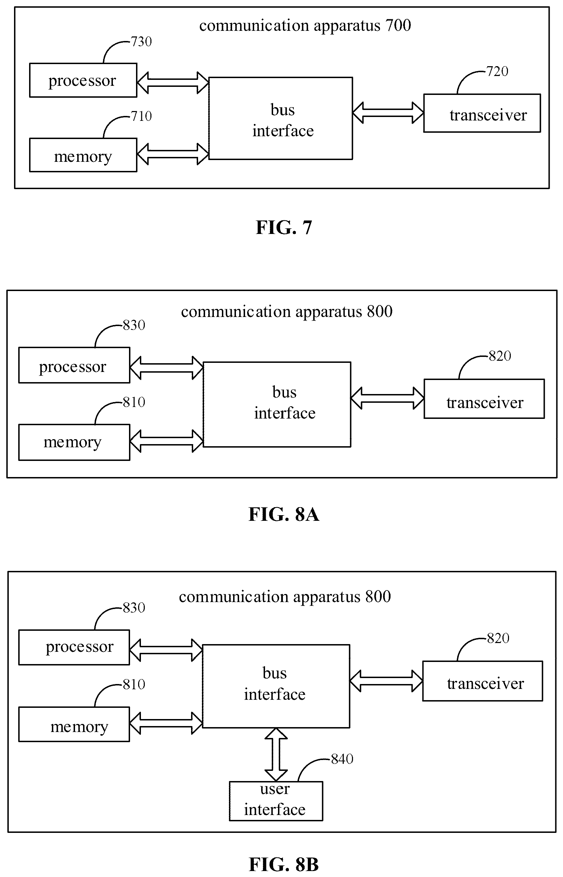

FIG. 7 is a schematic structural diagram of a communication apparatus 700 according to an embodiment of the present disclosure. As shown in FIG. 7, the apparatus 700 includes a memory 710, a transceiver 720, and a processor 730.

The memory 710 is configured to store a computer program. The transceiver 720 is configured to receive and transmit data under control of the processor 730.

The processor 730 is configured to read the computer program stored in the memory 710 and perform:
receiving a service request message sent by a second entity;
determining an execution operation list of a target service according to the service request message;
sending a first indication message to a third entity, where the first indication message includes the execution operation list;
receiving a first response message sent by the third entity, where the first response message includes a service result; and
sending a service response message to the second entity, where the service response message includes the service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the first indication message further includes an identifier of the target service, multiple indication parameters, and an identifier of an anchor network element.

In an implementation, the execution operation list includes an execution operation of the third entity and an execution operation of at least one fourth entity.

In an implementation, the first response message further includes the identifier of the target service and multiple indication parameters, and the service response message further includes the identifier of the target service and multiple indication parameters.

In an implementation, the processor 730 is specifically configured to perform:
acquiring load data of multiple candidate entities; and
determining the execution operation list according to the load data and the service request message.

In FIG. 7, the bus architecture may include any quantity of interconnected buses and bridges, and is specifically linked by various circuits of one or more processors represented by the processor 730 and a memory represented by the memory 710. The bus architecture may further link various other circuits such as a peripheral device, a voltage regulator, and a power management circuit together. These are all well-known in the art, and therefore are not further described in this specification. The bus interface provides interfaces. The transceiver 720 may be multiple elements, that is, includes a transmitter and a receiver, and provides units configured to communicate with various other apparatuses on a transmission medium, where the transmission medium includes a wireless channel, a wired channel, a fiber optic cable, and the like. The processor 730 is responsible for managing the bus architecture and common processing, and the memory 710 may store data used by the processor 730 when the processor 730 operates.

Optionally, the processor 730 may be a Central Processing Unit (CPU), an Application Specific Integrated Circuit (ASIC), a Field-Programmable Gate Array (FPGA), or a Complex Programmable Logic Device (CPLD). In addition, the processor may use a multi-core architecture.

It should be noted herein that the foregoing communication apparatus 700 provided in the disclosure can implement all method steps implemented by the first entity in the foregoing embodiments directed to the method, and can achieve a same technical effect. Details are not repeated herein of a part and a beneficial effect that are the same as those in the embodiments directed to the method.

FIG. 8A is a schematic structural diagram of a communication apparatus 800 according to an embodiment of the present disclosure. As shown in FIG. 8A, the communication apparatus 800 includes a memory 810, a transceiver 820, and a processor 830.

The memory 810 is configured to store a computer program. The transceiver 820 is configured to receive and transmit data under control of the processor 830.

The processor 830 is configured to read the computer program stored in the memory 810 and perform:
receiving a first indication message sent by a first entity, where the first indication message includes an execution operation list of a target service;
determining at least one execution operation of each fourth entity in at least one fourth entity according to the execution operation list;
sending an execution operation request message to the at least one fourth entity;
receiving an execution operation response message sent by the at least one fourth entity; and
sending a first response message to the first entity, where the first response message includes a service result.

In an implementation, the execution operation list includes an execution operation of a third entity and an execution operation of the at least one fourth entity.

In an implementation, the execution operation request message includes an identifier of the target service, an identifier of a target fourth entity, multiple indication parameters, and an execution operation sub-list of the target fourth entity.

The indication parameters are configured to indicate a current service stage and a next service stage. The execution operation sub-list includes at least one execution operation.

In an implementation, the execution operation response message includes the identifier of the target service, the identifier of the target fourth entity, multiple indication parameters, and an execution result of the target fourth entity. The first response message further includes the identifier of the target service and multiple indication parameters. The execution result is configured to determine the service result.

In an implementation, the processor 830 is specifically configured to perform:
receiving feedback information sent by the at least one fourth entity;
sending a coordination indication message to the at least one fourth entity according to the feedback information, where the coordination indication message is configured to instruct each fourth entity to update execution information, and the execution information includes resource information and/or execution operation information; and
receiving a coordination response message sent by the at least one fourth entity.

FIG. 8B is another schematic structural diagram of a communication apparatus 800 according to an embodiment of the present disclosure. As shown in FIG. 8B, in the case where the communication apparatus 800 is a terminal device, the apparatus may further include a user interface 840. For different terminal devices, the user interface 840 may further be an interface that can be externally or internally connected to a device that requires a connection, and the connected device includes but is not limited to a keypad, a display, a speaker, a microphone, a joystick, and the like.

In FIG. 8A and FIG. 8B, the bus architecture may include any quantity of interconnected buses and bridges, and is specifically linked by various circuits of one or more processors represented by the processor 830 and a memory represented by the memory 810. The bus architecture may further link various other circuits such as a peripheral device, a voltage regulator, and a power management circuit together. These are all well-known in the art, and therefore are not further described in this specification. The bus interface provides interfaces. The transceiver 820 may be multiple elements, that is, includes a transmitter and a receiver, and provides units configured to communicate with various other apparatuses on a transmission medium, the transmission medium including a wireless channel, a wired channel, a fiber optic cable, and the like. The processor 830 is responsible for managing the bus architecture and common processing, and the memory 810 may store data used by the processor 830 when the processor 830 operates.

Optionally, the processor 830 may be a CPU, an ASIC, an FPGA, or a CPLD. In addition, the processor may use a multi-core architecture.

The processor 830 invokes the computer program stored in the memory 810 to execute all method steps of the third entity in the embodiments of the present disclosure according to obtained executable instructions. The processor 830 and the memory 810 may also be physically disposed separately.

It should be noted herein that the foregoing communication apparatus 800 provided in this disclosure can implement all method steps implemented by the third entity in the foregoing embodiments directed to the method, and can achieve a same technical effect. Details are not repeated herein of a part and a beneficial effect that are the same as those in the embodiments directed to the method.

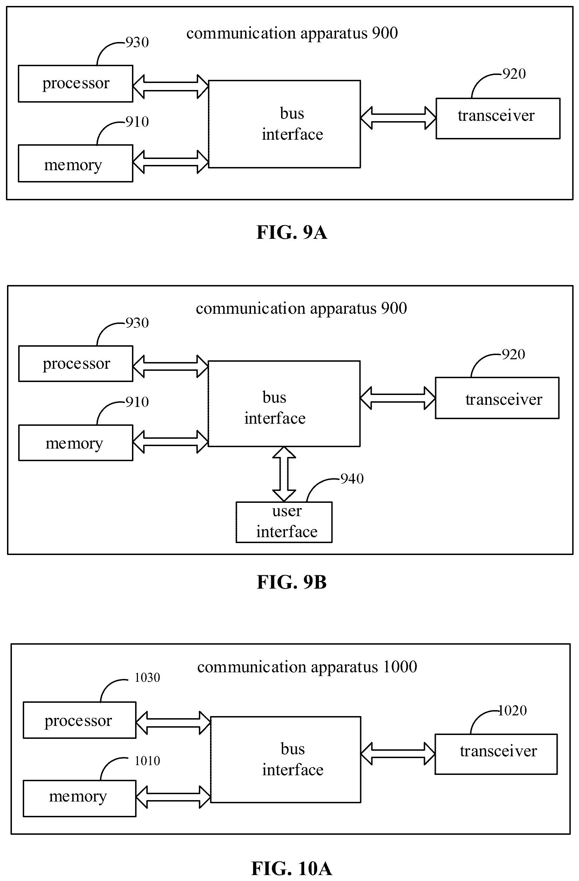

FIG. 9A is a schematic structural diagram of a communication apparatus 900 according to an embodiment of the present disclosure. As shown in FIG. 9A, the communication apparatus 900 includes a memory 910, a transceiver 920, and a processor 930.

The memory 910 is configured to store a computer program. The transceiver 920 is configured to receive and transmit data under control of the processor 930.

The processor 930 is configured to read the computer program stored in the memory 910 and perform:
receiving an execution operation request message sent by a third entity;
determining an execution result according to the execution operation request message; and
sending an execution operation response message to the third entity, where the execution operation response message includes the execution result.

In an implementation, the execution operation request message includes an identifier of a target service, an identifier of a fourth entity, multiple indication parameters, and an execution operation sub-list of the fourth entity.

The multiple indication parameters are configured to indicate a current service stage and a next service stage, and the execution operation sub-list includes at least one execution operation.

In an implementation, the execution operation response message further includes the identifier of the target service, the identifier of the fourth entity, and multiple indication parameters.

In an implementation, the processor 930 is specifically configured to perform:
sending feedback information to the third entity;
receiving a coordination indication message sent by the third entity;
updating execution information according to the coordination indication message, where the execution information includes resource information and/or execution operation information; and
sending a coordination response message to the third entity.

FIG. 9B is another schematic structural diagram of a communication apparatus 900 according to an embodiment of the present disclosure. As shown in FIG. 9B, in the case where the communication apparatus 900 is a terminal device, the apparatus may further include a user interface 940. For different terminal devices, the user interface 940 may further be an interface that can be externally or internally connected to a device that requires a connection, and the connected device includes but is not limited to a keypad, a display, a speaker, a microphone, a joystick, and the like.

In FIG. 9A and FIG. 9B, the bus architecture may include any quantity of interconnected buses and bridges, and is specifically linked by various circuits of one or more processors represented by the processor 930 and a memory represented by the memory 910. The bus architecture may further link various other circuits such as a peripheral device, a voltage regulator, and a power management circuit together. These are all well-known in the art, and therefore are not further described in this specification. The bus interface provides interfaces. The transceiver 920 may be multiple elements, that is, includes a transmitter and a receiver, and provides units configured to communicate with various other apparatuses on a transmission medium, where the transmission medium includes a wireless channel, a wired channel, a fiber optic cable, and the like. The processor 930 is responsible for managing the bus architecture and common processing, and the memory 910 may store data used by the processor 930 when the processor 930 operates.

Optionally, the processor 930 may be a CPU, an ASIC, an FPGA, or a CPLD. In addition, the processor may use a multi-core architecture.

The processor 930 invokes the computer program stored in the memory 910 to execute all method steps of the fourth entity in the embodiments of this disclosure according to obtained executable instructions. The processor 930 and the memory 910 may also be physically disposed separately.

It should be noted herein that the foregoing communication apparatus 900 provided in this disclosure can implement all method steps implemented by the fourth entity in the foregoing embodiments directed to the method, and can achieve a same technical effect. Details are not repeated herein of a part and a beneficial effect that are the same as those in the embodiments directed to the method.

FIG. 10A is a schematic structural diagram of a communication apparatus 1000 according to an embodiment of the present disclosure. As shown in FIG. 10A, the communication apparatus 1000 includes a memory 1010, a transceiver 1020, and a processor 1030.

The memory 1010 is configured to store a computer program. The transceiver 1020 is configured to receive and transmit data under control of the processor 1030.

The processor 1030 is configured to read the computer program stored in the memory 1010 and perform:
acquiring a service requirement;
sending a service request message to a first entity, where the service request message is configured to request for execution of a target service; and
receiving a service response message sent by the first entity, where the service response message includes a service result.

In an implementation, the service request message includes at least one of the following: an identifier of a second entity; multiple indication parameters, where the multiple indication parameters are configured to indicate a current service stage and a next service stage; a service type of the target service; or requirement information of the target service.

In an implementation, the service response message further includes an identifier of the target service and multiple indication parameters.

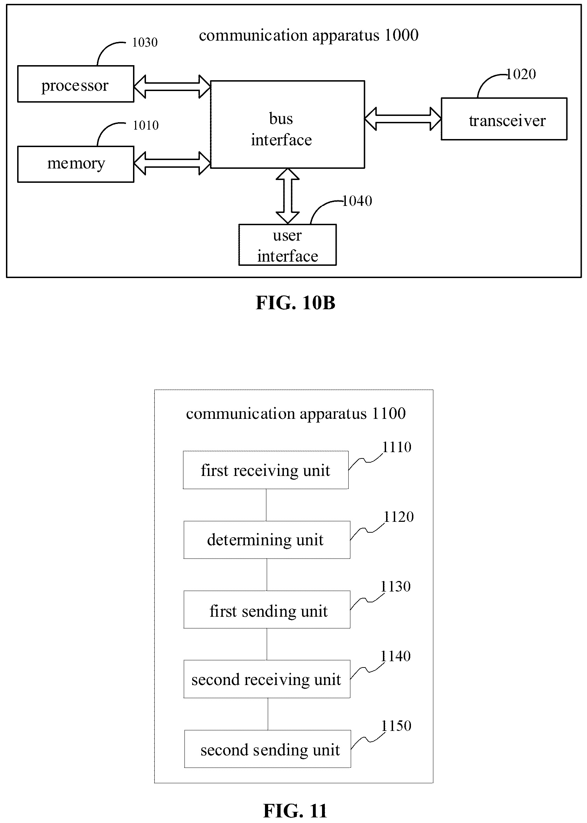

FIG. 10B is another schematic structural diagram of a communication apparatus 1000 according to an embodiment of the present disclosure. As shown in FIG. 10B, in the case where the communication apparatus 1000 is a terminal device, the apparatus may further include a user interface 1040. For different terminal devices, the user interface 1040 may further be an interface that can be externally or internally connected to a device that requires a connection, and the connected device includes but is not limited to a keypad, a display, a speaker, a microphone, a joystick, and the like.

In FIG. 10A and FIG. 10B, the bus architecture may include any quantity of interconnected buses and bridges, and is specifically linked by various circuits of one or more processors represented by the processor 1030 and a memory represented by the memory 1010. The bus architecture may further link various other circuits such as a peripheral device, a voltage regulator, and a power management circuit together. These are all well-known in the art, and therefore are not further described in this specification. The bus interface provides interfaces. The transceiver 1020 may be multiple elements, that is, includes a transmitter and a receiver, and provides units configured to communicate with various other apparatuses on a transmission medium, where the transmission medium includes a wireless channel, a wired channel, a fiber optic cable, and the like. The processor 1030 is responsible for managing the bus architecture and common processing, and the memory 1010 may store data used by the processor 1030 when the processor 1030 operates.

Optionally, the processor 1030 may be a CPU, an ASIC, an FPGA, or a CPLD. In addition, the processor may use a multi-core architecture.

The processor 1030 invokes the computer program stored in the memory 1010 to execute all method steps of the second entity in the embodiments of the present disclosure according to obtained executable instructions. The processor 1030 and the memory 1010 may also be physically disposed separately.

It should be noted herein that the foregoing communication apparatus 1000 provided in this disclosure can implement all method steps implemented by the second entity in the foregoing embodiments directed to the method, and can achieve a same technical effect. Details are not repeated herein of a part and a beneficial effect that are the same as those in the embodiments directed to the method.

FIG. 11 is a schematic structural diagram of a communication apparatus 1100 according to an embodiment of the present disclosure. As shown in FIG. 11, the apparatus includes:
a first receiving unit 1110, configured to receive a service request message sent by a second entity;
a determining unit 1120, configured to determine an execution operation list of a target service according to the service request message;
a first sending unit 1130, configured to send a first indication message to a third entity, where the first indication message includes the execution operation list;
a second receiving unit 1140, configured to receive a first response message sent by the third entity, where the first response message includes a service result; and
a second sending unit 1150, configured to send a service response message to the second entity, where the service response message includes the service result.

In an implementation, the service request message includes at least one of the following: an identifier of the second entity; multiple indication parameters, where the multiple indication parameters are configured to indicate a current service stage and a next service stage; a service type of the target service; or requirement information of the target service.

In an implementation, the first indication message further includes an identifier of the target service, multiple indication parameters, and an identifier of an anchor network element.

In an implementation, the execution operation list includes an execution operation of the third entity and an execution operation of at least one fourth entity.

In an implementation, the first response message further includes the identifier of the target service and multiple indication parameters, and the service response message further includes the identifier of the target service and multiple indication parameters.

In an implementation, the determining unit 1120 is specifically configured to:
acquire load data of multiple candidate entities; and
determine the execution operation list according to the load data and the service request message.

It should be noted herein that the foregoing apparatus 1100 provided in this disclosure can implement all method steps implemented by the first entity in the foregoing embodiments directed to the method, and can achieve a same technical effect. Herein, a part and a beneficial effect that are the same as those in the embodiments directed to the method are not repeated herein.

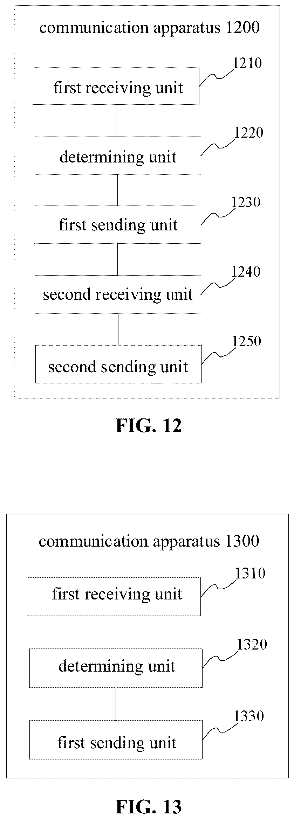

FIG. 12 is a schematic structural diagram of a communication apparatus 1200 according to an embodiment of the present disclosure. As shown in FIG. 12, the apparatus includes:
a first receiving unit 1210, configured to receive a first instruction message sent by a first entity, where the first instruction message includes an execution operation list of a target service;
a determining unit 1220, configured to determine at least one execution operation of each fourth entity in at least one fourth entity according to the execution operation list;
a first sending unit 1230, configured to send an execution operation request message to the at least one fourth entity;
a second receiving unit 1240, configured to receive an execution operation response message sent by the at least one fourth entity; and
a second sending unit 1250, configured to send a first response message to the first entity, where the first response message includes a service result.

In an implementation, the execution operation list includes an execution operation of a third entity and an execution operation of the at least one fourth entity.

In an implementation, the execution operation request message includes an identifier of the target service, an identifier of a target fourth entity, multiple indication parameters, and an execution operation sub-list of the target fourth entity.

The indication parameters are configured to indicate a current service stage and a next service stage. The execution operation sub-list includes at least one execution operation.

In an implementation, the execution operation response message includes the identifier of the target service, the identifier of the target fourth entity, multiple indication parameters, and an execution result of the target fourth entity. The first response message further includes the identifier of the target service and multiple indication parameters. The execution result is configured to determine the service result.

In an implementation manner, the apparatus 1200 further includes:
a third receiving unit 1260, configured to receive feedback information sent by the at least one fourth entity;
a third sending unit 1270, configured to send a coordination indication message to the at least one fourth entity according to the feedback information, where the coordination indication message is configured to instruct each fourth entity to update execution information, and the execution information includes resource information and/or execution operation information; and
a fourth receiving unit 1280, configured to receive a coordination response message sent by the at least one fourth entity.

It should be noted herein that the foregoing apparatus 1200 provided in this disclosure can implement all method steps implemented by the third entity in the foregoing embodiments directed to the method, and can achieve a same technical effect. Details are not repeated herein of a part and a beneficial effect that are the same as those in the embodiments directed to the method.

FIG. 13 is a schematic structural diagram of a communication apparatus 1300 according to an embodiment of the present disclosure. As shown in FIG. 13, the apparatus includes:
a first receiving unit 1310, configured to receive an execution operation request message sent by a third entity;
a determining unit 1320, configured to determine an execution result according to the execution operation request message; and
a first sending unit 1330, configured to send an execution operation response message to the third entity, where the execution operation response message includes the execution result.

In an implementation, the execution operation request message includes an identifier of a target service, an identifier of a fourth entity, multiple indication parameters, and an execution operation sub-list of the fourth entity.

The multiple indication parameters are configured to indicate a current service stage and a next service stage, and the execution operation sub-list includes at least one execution operation.

In an implementation, the execution operation response message further includes the identifier of the target service, the identifier of the fourth entity, and multiple indication parameters.

In an implementation, the apparatus 1300 further includes:
a second sending unit 1340, configured to send feedback information to the third entity;
a second receiving unit 1350, configured to receive a coordination indication message sent by the third entity;
an updating unit 1360, configured to update execution information according to the coordination indication message, where the execution information includes resource information and/or execution operation information; and
a third sending unit, configured to send a coordination response message to the third entity.

It should be noted herein that the foregoing apparatus 1300 provided in this disclosure can implement all method steps implemented by the fourth entity in the foregoing embodiments directed to the method, and can achieve a same technical effect. Details are not repeated herein of a part and a beneficial effect that are the same as those in the embodiments directed to the method.

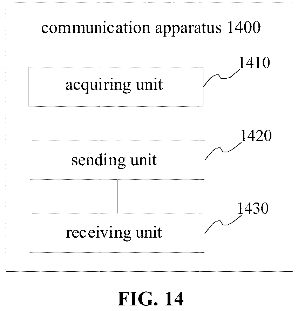

FIG. 14 is a schematic structural diagram of a communication apparatus 1400 according to an embodiment of the present disclosure. As shown in FIG. 14, the apparatus includes:
an acquiring unit 1410, configured to acquire a service requirement;
a sending unit 1420, configured to send a service request message to a first entity, where the service request message is configured to request for execution of a target service; and
a receiving unit 1430, configured to receive a service response message sent by the first entity, where the service response message includes a service result.

In an implementation, the service request message includes at least one of the following: an identifier of a second entity; multiple indication parameters, where the multiple indication parameters are configured to indicate a current service stage and a next service stage; a service type of the target service; or requirement information of the target service.

In an implementation, the service response message further includes an identifier of the target service and multiple indication parameters.

It should be noted herein that the foregoing apparatus 1400 provided in this disclosure can implement all method steps implemented by the second entity in the foregoing embodiments directed to the method, and can achieve a same technical effect. Details are not repeated herein of a part and a beneficial effect that are the same as those in the embodiments directed to the method.

It should be noted that unit division in this embodiment of the present disclosure is an example, and is merely logical function division. In actual implementation, there may be another division manner. In addition, functional units in the embodiments of the present disclosure may be integrated into one processing unit, or each unit may exist separately physically, or two or more units may be integrated into one unit. The foregoing integrated unit may be implemented in a form of hardware, or may be implemented in a form of a software functional unit.

If the integrated unit is implemented in a form of a software functional unit and sold or used as an independent product, the integrated unit may be stored in a processor readable storage medium. Based on such an understanding, the technical solutions of the present disclosure essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor to perform all or a part of the steps of the methods described in the embodiments of the present disclosure. The foregoing storage medium includes any medium that can store program code, such as a USB flash drive, a removable hard disk, a Read-Only Memory (ROM), a Random Access Memory (RAM), a magnetic disk, or an optical disc.

An embodiment of the present disclosure further provides a non-transitory readable storage medium, where the non-transitory readable storage medium stores a computer program, and the computer program is configured to enable a processor to perform all method steps of the first entity in the foregoing method embodiments.

An embodiment of the present disclosure further provides a non-transitory readable storage medium, where the non-transitory readable storage medium stores a computer program, and the computer program is configured to enable a processor to perform all method steps of the third entity in the foregoing method embodiments.

An embodiment of the present disclosure further provides a non-transitory readable storage medium, where the non-transitory readable storage medium stores a computer program, and the computer program is configured to enable a processor to perform all method steps of the fourth entity in the foregoing method embodiments.

An embodiment of the present disclosure further provides a non-transitory readable storage medium, where the non-transitory readable storage medium stores a computer program, and the computer program is configured to enable a processor to perform all method steps of the second entity in the foregoing method embodiments.

The non-transitory readable storage medium may be any available medium or data storage device accessible to a computer, including but not limited to a magnetic memory (such as a floppy disk, a hard disk, a magnetic tape, a magnetic disk (MO)), an optical memory (such as a CD, a DVD, a BD, a HVD), and a semiconductor memory (such as a ROM, an EPROM, an EEPROM, a non-volatile memory (NAND FLASH), a solid-state disk (SSD)).

An embodiment of the present disclosure further provides a computer program product, including a computer program. When a processor executes the computer program, the method in any one of the foregoing method embodiments is implemented.

A person skilled in the art should understand that the embodiments of this disclosure may be provided as methods, systems, or computer program products. Therefore, the present disclosure may take the form of a complete hardware embodiment, a complete software embodiment, or an embodiment incorporating software and hardware aspects. In addition, the present disclosure may take the form of a computer program product implemented on one or more computer-usable storage media (including but not limited to a disk memory, an optical memory, and the like) that include computer-usable program code.

The present disclosure is described with reference to a flowchart and/or block diagram of a method, a device (system), and a computer program product according to an embodiment of the present disclosure. It should be understood that computer executable instructions may be used to implement each process and/or block in the flowchart and/or block diagram, and a combination of processes and/or blocks in the flowchart and/or block diagram. These computer executable instructions may be provided to a processor of a general-purpose computer, a dedicated computer, an embedded processor, or other programmable data processing device to produce a machine, such that instructions executed by a processor of a computer or other programmable data processing device generate means for implementing a function specified in one or more processes of the flowchart and/or one or more blocks of the block diagram.

The processor executable instructions may also be stored in a processor readable memory that can instruct a computer or another programmable data processing device to work in a specific manner, so that an instruction stored in the processor readable memory generates a manufacturer including an instruction apparatus. The instruction apparatus implements a function specified in one or more procedures of a flowchart and/or one or more blocks of a block diagram.

These processor executable instructions may also be loaded onto a computer or other programmable data processing device such that a series of operation steps are performed on the computer or other programmable device to produce computer-implemented processing, thereby providing instructions executed on the computer or other programmable device to implement the functions specified in one or more processes of the flowchart and/or one or more blocks of the block diagram.

It is apparent to those skilled in the art that various modifications and variations may be made to this disclosure without departing from the spirit and scope of this disclosure. Thus, if these modifications and variations of this disclosure fall within the scope of the claims of this disclosure and their equivalents, this disclosure is also intended to include these modifications and variations.

## Claims

1. A communication system, **characterized by** comprising a first entity, a second entity, a third entity, and at least one fourth entity, wherein the first entity, the second entity, the third entity, and the at least one fourth entity are connected to each other; and
wherein the second entity is configured to acquire a service requirement and send a service request message to the first entity;
the first entity is configured to determine an execution operation list of a target service according to the service request message;
the third entity is configured to determine at least one execution operation of each fourth entity according to the execution operation list; and
each fourth entity is configured to execute the at least one execution operation and obtain an execution result.

2. The communication system according to claim 1, wherein
the first entity is deployed in an access network or a core network;
the second entity is a first terminal device, or the second entity is deployed in a second terminal device, the access network, or the core network;
the third entity is a third terminal device, or the third entity is deployed in a fourth terminal device, the access network, or the core network; and
each fourth entity is a fifth terminal device, or each fourth entity is deployed in a sixth terminal device, the access network, or the core network;
wherein the first terminal device, the third terminal device and the fifth terminal device are the same or different, and the second terminal device, the fourth terminal device and the sixth terminal device are the same or different.

3. The communication system according to claim 2, wherein each fourth entity is further configured to send an execution operation response message to the third entity, the execution operation response message comprising the execution result, an identifier of the target service, an identifier of the each fourth entity, and a plurality of indication parameters; and
wherein the execution result is configured to determine a service result; and the plurality of indication parameters are configured to indicate a current service stage and a next service stage.

4. The communication system according to claim 3, wherein the third entity is further configured to send a first response message to the first entity, the first response message comprising the service result, the identifier of the target service, and the plurality of indication parameters.

5. The communication system according to claim 4, wherein the first entity is further configured to send a service response message to the second entity, the service response message comprising the service result, the identifier of the target service, and the plurality of indication parameters.

6. The communication system according to any one of claims 2 to 5, wherein the first entity is further configured to send a first indication message to the third entity, the first indication message comprising the execution operation list, an identifier of the target service, a plurality of indication parameters, and an identifier of an anchor network element; and
wherein the execution operation list comprises an execution operation of the third entity and an execution operation of the at least one fourth entity.

7. The communication system according to any one of claims 2 to 6, wherein the third entity is further configured to send an execution operation request message to the at least one fourth entity; and
the execution operation request message comprises an identifier of the target service, an identifier of a target fourth entity, a plurality of indication parameters, and an execution operation sub-list of the target fourth entity, the execution operation sub-list comprising at least one execution operation.

8. The communication system according to any one of claims 2 to 7, wherein the first entity is configured to: acquire load data of a plurality of candidate entities, and determine the execution operation list according to the load data and the service request message; and
wherein the service request message comprises at least one of the following:
an identifier of the second entity;
a plurality of indication parameters;
s service type of the target service; or
requirement information of the target service.

9. The communication system according to any one of claims 2 to 8, wherein the third entity interacts with the at least one fourth entity to update execution information of each fourth entity, and the execution information comprises resource information and/or execution operation information.

10. A communication method, applied to a first entity, **characterized by** comprising:
receiving a service request message sent by a second entity;
determining an execution operation list of a target service according to the service request message;
sending a first indication message to a third entity, wherein the first indication message comprises the execution operation list;
receiving a first response message sent by the third entity, wherein the first response message comprises a service result; and
sending a service response message to the second entity, wherein the service response message comprises the service result.

11. The communication method according to claim 10, wherein the service request message comprises at least one of the following:
an identifier of the second entity;
a plurality of indication parameters, wherein the plurality of indication parameters are configured to indicate a current service stage and a next service stage;
a service type of the target service; or
requirement information of the target service.

12. The communication method according to claim 10 or 11, wherein the first indication message further comprises an identifier of the target service, a plurality of indication parameters, and an identifier of an anchor network element.

13. The method according to any one of claims 10 to 12, wherein the execution operation list comprises an execution operation of the third entity and an execution operation of at least one fourth entity.

14. The method according to any one of claims 10-13, wherein the first response message further comprises an identifier of the target service and a plurality of indication parameters, and the service response message further comprises the identifier of the target service and the plurality of indication parameters.

15. The method according to any one of claims 10 to 14, wherein determining the execution operation list of the target service according to the service request message comprises:
acquiring load data of a plurality of candidate entities; and
determining the execution operation list according to the load data and the service request message.

16. A communication method, applied to a third entity, **characterized by** comprising:
receiving a first instruction message sent by a first entity, wherein the first instruction message comprises an execution operation list of a target service;
determining at least one execution operation of each fourth entity in at least one fourth entity according to the execution operation list;
sending an execution operation request message to the at least one fourth entity;
receiving an execution operation response message sent by the at least one fourth entity; and
sending a first response message to the first entity, wherein the first response message comprises a service result.

17. The communication method according to claim 16, wherein the execution operation list comprises an execution operation of the third entity and an execution operation of the at least one fourth entity.

18. The communication method according to claim 16 or 17, wherein the execution operation request message comprises an identifier of the target service, an identifier of a target fourth entity, a plurality of indication parameters, and an execution operation sub-list of the target fourth entity; and
wherein the plurality of indication parameters are configured to indicate a current service stage and a next service stage; and the execution operation sub-list comprises at least one execution operation.

19. The communication method according to any one of claims 16 to 18, wherein the execution operation response message comprises an identifier of the target service, an identifier of a target fourth entity, a plurality of indication parameters, and an execution result of the target fourth entity, and the first response message further comprises the identifier of the target service and the plurality of indication parameters; and wherein the execution result is configured to determine the service result.

20. The communication method according to any one of claims 16-19, further comprising:
receiving feedback information sent by the at least one fourth entity;
sending a coordination indication message to the at least one fourth entity according to the feedback information, wherein the coordination indication message is configured to instruct each fourth entity to update execution information, and the execution information comprises resource information and/or execution operation information; and
receiving a coordination response message sent by the at least one fourth entity.

21. A communication method, applied to a fourth entity, **characterized by** comprising:
receiving an execution operation request message sent by a third entity;
determining an execution result according to the execution operation request message; and
sending an execution operation response message to the third entity, wherein the execution operation response message comprises the execution result.

22. The communication method according to claim 21, wherein the execution operation request message comprises an identifier of a target service, an identifier of the fourth entity, a plurality of indication parameters, and an execution operation sub-list of the fourth entity; and
wherein the plurality of indication parameters are configured to indicate a current service stage and a next service stage, and the execution operation sub-list comprises at least one execution operation.

23. The communication method according to claim 22, wherein the execution operation response message further comprises the identifier of the target service, the identifier of the fourth entity, and the plurality of indication parameters.

24. The communication method according to any one of claims 21 to 23, further comprising:
sending feedback information to the third entity;
receiving a coordination indication message sent by the third entity;
updating execution information according to the coordination indication message, wherein the execution information comprises resource information and/or execution operation information; and
sending a coordination response message to the third entity.

25. A communication method, applied to a second entity, **characterized by** comprising:
acquiring a service requirement;
sending a service request message to a first entity, wherein the service request message is configured to request for execution of a target service; and
receiving a service response message sent by the first entity, wherein the service response message comprises a service result.

26. The communication method according to claim 25, wherein the service request message comprises at least one of the following:
an identifier of the second entity;
a plurality of indication parameters, wherein the plurality of indication parameters are configured to indicate a current service stage and a next service stage;
a service type of the target service; or
requirement information of the target service.

27. The communication method according to claim 25 or 26, wherein the service response message further comprises an identifier of the target service and a plurality of indication parameters.

28. A communication apparatus, **characterized by** comprising:
a first receiving unit, configured to receive a service request message sent by a second entity;
a determining unit, configured to determine an execution operation list of a target service according to the service request message;
a first sending unit, configured to send a first indication message to a third entity, wherein the first indication message comprises the execution operation list;
a second receiving unit, configured to receive a first response message sent by the third entity, wherein the first response message comprises a service result; and
a second sending unit, configured to send a service response message to the second entity, wherein the service response message comprises the service result.

29. The communication apparatus according to claim 28, wherein the service request message comprises at least one of the following:
an identifier of the second entity;
a plurality of indication parameters, wherein the plurality of indication parameters are configured to indicate a current service stage and a next service stage;
a service type of the target service; or
requirement information of the target service.

30. The communication apparatus according to claim 28 or 29, wherein the first indication message further comprises an identifier of the target service, a plurality of indication parameters, and an identifier of an anchor network element.

31. The communication apparatus according to any one of claims 28-30, wherein the execution operation list comprises an execution operation of the third entity and an execution operation of at least one fourth entity.

32. The communication apparatus according to any one of claims 28-31, wherein the first response message further comprises an identifier of the target service and a plurality of indication parameters, and the service response message further comprises the identifier of the target service and the plurality of indication parameters.

33. The communication apparatus according to any one of claims 28-32, wherein the determining unit is configured to:
acquire load data of a plurality of candidate entities; and
determine the execution operation list according to the load data and the service request message.

34. A communication apparatus, **characterized by** comprising:
a first receiving unit, configured to receive a first instruction message sent by a first entity, wherein the first instruction message comprises an execution operation list of a target service;
a determining unit, configured to determine at least one execution operation of each fourth entity in at least one fourth entity according to the execution operation list;
a first sending unit, configured to send an execution operation request message to the at least one fourth entity;
a second receiving unit, configured to receive an execution operation response message sent by the at least one fourth entity; and
a second sending unit, configured to send a first response message to the first entity, wherein the first response message comprises a service result.

35. The communication apparatus according to claim 34, wherein the execution operation list comprises an execution operation of a third entity and an execution operation of the at least one fourth entity.

36. The communication apparatus according to claim 34 or 35, wherein the execution operation request message comprises an identifier of the target service, an identifier of a target fourth entity, a plurality of indication parameters, and an execution operation sub-list of the target fourth entity; and
wherein the plurality of indication parameters are configured to indicate a current service stage and a next service stage, and the execution operation sub-list comprises at least one execution operation.

37. The communication apparatus according to any one of claims 34-36, wherein the execution operation response message comprises an identifier of the target service, an identifier of a target fourth entity, a plurality of indication parameters, and an execution result of the target fourth entity, and the first response message further comprises the identifier of the target service and the plurality of indication parameters; and wherein the execution result is configured to determine the service result.

38. The communication apparatus according to any one of claims 34-37, further comprising:
a third receiving unit, configured to receive feedback information sent by the at least one fourth entity;
a third sending unit, configured to send a coordination indication message to the at least one fourth entity, wherein the coordination indication message is configured to instruct each fourth entity to update execution information, and the execution information comprises resource information and/or execution operation information; and
a fourth receiving unit, configured to receive a coordination response message sent by the at least one fourth entity.

39. A communication apparatus, **characterized by** comprising:
a first receiving unit, configured to receive an execution operation request message sent by a third entity;
a determining unit, configured to determine an execution result according to the execution operation request message; and
a first sending unit, configured to send an execution operation response message to the third entity, wherein the execution operation response message comprises the execution result.

40. The communication apparatus according to claim 39, wherein the execution operation request message comprises an identifier of a target service, an identifier of a fourth entity, a plurality of indication parameters, and an execution operation sub-list of the fourth entity; and
wherein the plurality of indication parameters are configured to indicate a current service stage and a next service stage, and the execution operation sub-list comprises at least one execution operation.

41. The communication apparatus according to claim 40, wherein the execution operation response message further comprises the identifier of the target service, the identifier of the fourth entity, and the plurality of indication parameters.

42. The communication apparatus according to any one of claims 39-41, further comprising:
a second sending unit, configured to send feedback information to the third entity;
a second receiving unit, configured to receive a coordination indication message sent by the third entity;
an updating unit, configured to update execution information according to the coordination indication message, wherein the execution information comprises resource information and/or execution operation information; and
a third sending unit, configured to send a coordination response message to the third entity.

43. A communication apparatus, **characterized by** comprising:
an acquiring unit, configured to acquire a service requirement;
a sending unit, configured to send a service request message to a first entity, wherein the service request message is configured to request for execution of a target service; and
a receiving unit, configured to receive a service response message sent by the first entity, wherein the service response message comprises a service result.

44. The apparatus according to claim 43, wherein the service request message comprises at least one of the following:
an identifier of a second entity;
a plurality of indication parameters, wherein the plurality of indication parameters are configured to indicate a current service stage and a next service stage;
a service type of the target service; or
requirement information of the target service.

45. The apparatus according to claim 43 or 44, wherein the service response message further comprises an identifier of the target service and a plurality of indication parameters.

46. A communication apparatus, **characterized by** comprising a memory, a transceiver, and a processor, wherein
the memory is configured to store a computer program;
the transceiver is configured to receive and transmit data under control of the processor; and
the processor is configured to read the computer program in the memory and perform:
receiving a service request message sent by a second entity;
determining an execution operation list of a target service according to the service request message;
sending a first indication message to a third entity, wherein the first indication message comprises the execution operation list;
receiving a first response message sent by the third entity, wherein the first response message comprises a service result; and
sending a service response message to the second entity, wherein the service response message comprises the service result.

47. The communication apparatus according to claim 46, wherein the service request message comprises at least one of the following:
an identifier of the second entity;
a plurality of indication parameters, wherein the plurality of indication parameters are configured to indicate a current service stage and a next service stage;
a service type of the target service; or
requirement information of the target service.

48. The communication apparatus according to claim 46 or 47, wherein the first indication message further comprises an identifier of the target service, a plurality of indication parameters, and an identifier of an anchor network element.

49. The communication apparatus according to any one of claims 46-48, wherein the execution operation list comprises an execution operation of the third entity and an execution operation of at least one fourth entity.

50. The communication apparatus according to any one of claims 46-49, wherein the first response message further comprises an identifier of the target service and a plurality of indication parameters, and the service response message further comprises the identifier of the target service and the a plurality of indication parameters.

51. The communication apparatus according to any one of claims 46-50, wherein the processor is configured to perform:
acquiring load data of a plurality of candidate entities; and
determining the execution operation list according to the load data and the service request message.

52. A communication apparatus, **characterized by** comprising a memory, a transceiver, and a processor, wherein
the memory is configured to store a computer program;
the transceiver is configured to receive and transmit data under control of the processor; and
the processor is configured to read the computer program in the memory and perform:
receiving a first instruction message sent by a first entity, wherein the first instruction message comprises an execution operation list of a target service;
determining at least one execution operation of each fourth entity in at least one fourth entity according to the execution operation list;
sending an execution operation request message to the at least one fourth entity;
receiving an execution operation response message sent by the at least one fourth entity; and
sending a first response message to the first entity, wherein the first response message comprises a service result.

53. The communication apparatus according to claim 52, wherein the execution operation list comprises an execution operation of a third entity and an execution operation of the at least one fourth entity.

54. The communication apparatus according to claim 52 or 53, wherein the execution operation request message comprises an identifier of the target service, an identifier of a target fourth entity, a plurality of indication parameters, and an execution operation sub-list of the target fourth entity; and
wherein the plurality of indication parameters are configured to indicate a current service stage and a next service stage; and the execution operation sub-list comprises at least one execution operation.

55. The communication apparatus according to any one of claims 52-54, wherein the execution operation response message comprises an identifier of the target service, an identifier of a target fourth entity, a plurality of indication parameters, and an execution result of the target fourth entity, and the first response message further comprises the identifier of the target service and the plurality of indication parameters; and wherein the execution result is configured to determine the service result.

56. The communication apparatus according to any one of claims 52-55, wherein the processor is further configured to perform:
receiving feedback information sent by the at least one fourth entity;
sending a coordination indication message to the at least one fourth entity according to the feedback information, wherein the coordination indication message is configured to instruct each fourth entity to update execution information, and the execution information comprises resource information and/or execution operation information; and
receiving a coordination response message sent by the at least one fourth entity.

57. A communication apparatus, **characterized by** comprising a memory, a transceiver, and a processor, wherein
the memory is configured to store a computer program;
the transceiver is configured to receive and transmit data under control of the processor; and
the processor is configured to read the computer program in the memory and perform:
receiving an execution operation request message sent by a third entity;
determining an execution result according to the execution operation request message; and
sending an execution operation response message to the third entity, wherein the execution operation response message comprises the execution result.

58. The communication apparatus according to claim 57, wherein the execution operation request message comprises an identifier of a target service, an identifier of a fourth entity, a plurality of indication parameters, and an execution operation sub-list of the fourth entity; and
wherein the plurality of indication parameters are configured to indicate a current service stage and a next service stage, and the execution operation sub-list comprises at least one execution operation.

59. The communication apparatus according to claim 57 or 58, wherein the execution operation response message further comprises an identifier of a target service, an identifier of a fourth entity, and a plurality of indication parameters.

60. The communication apparatus according to any one of claims 57-59, wherein the processor is further configured to perform:
sending feedback information to the third entity;
receiving a coordination indication message sent by the third entity;
updating execution information according to the coordination indication message, wherein the execution information comprises resource information and/or execution operation information; and
sending a coordination response message to the third entity.

61. A communication apparatus, **characterized by** comprising a memory, a transceiver, and a processor, wherein
the memory is configured to store a computer program;
the transceiver is configured to receive and transmit data under control of the processor; and
the processor is configured to read the computer program in the memory and perform:
acquiring a service requirement;
sending a service request message to a first entity, wherein the service request message is configured to request for execution of a target service; and
receiving a service response message sent by the first entity, wherein the service response message comprises a service result.

62. The communication apparatus according to claim 61, wherein the service request message comprises at least one of the following:
an identifier of a second entity;
a plurality of indication parameters, wherein the plurality of indication parameters are configured to indicate a current service stage and a next service stage;
a service type of the target service; or
requirement information of the target service.

63. The communication apparatus according to claim 61 or 62, wherein the service response message further comprises an identifier of the target service and a plurality of indication parameters.

64. A non-transitory readable storage medium, **characterized in that** the non-transitory readable storage medium stores a computer program, and the computer program is configured to cause a processor to perform the communication method according to any one of claims 10 to 15, or perform the communication method according to any one of claims 16 to 20, or perform the communication method according to any one of claims 21 to 24, or perform the communication method according to any one of claims 25 to 27.
